# EUROPÄISCHE PATENTANMELDUNG

(11) **EP 0 753 690 A1**
(43) Veröffentlichungstag der Anmeldung: **15.01.1997**
(21) Anmeldenummer: 96103706.6
(22) Anmeldetag: 09.03.1996
(51) Int. Cl.: F16J 15/32

(54) **Radialwellendichtring sowie Verfahren zu dessen Herstellung**

(30) Priorität: 10.07.1995 DE 19525054
(71) Anmelder: Firma Carl Freudenberg, D-69469 Weinheim (DE)
(72) Erfinder: Reinhardt, Hans, 69469 Weinheim (DE); Vogt, Rolf, D-68723 Oftersheim (DE)

(57) **Zusammenfassung**

Radialwellendichtring mit einem Dichtring (1) aus polymerem Dichtungswerkstoff, der zumindest eine Dichtlippe (2) aufweist, die auf der druckabgewandten Seite mittels eines Backrings (3) auf der abzudichtenden Welle (4) abgestützt und mit einem Versteifungsring (5) unlösbar verbunden ist, wobei der Versteifungsring (5) von einem winkelförmigem Profil ist, das den Backring (3) mit einem in radialer Richtung nach innen vorspringenden Schenkel (5) zumindest teilweise übergreift und anliegend berührt.

## Beschreibung

Die Erfindung betrifft einen Radialwellendichtring nach dem Oberbegriff von Anspruch 1, so wie ein Verfahren zu dessen Herstellung.

Ein solcher Radialwellendichtring ist aus der DE-OS 43 17 489 bekannt. Er ist aufwendig in der Herstellung und wenig befriedigend hinsichtlich seiner Gebrauchseigenschaften.

Der Erfindung liegt die Aufgabe zugrunde, einen solchen Radialwellendichtring derart weiterzuentwickeln, daß sich bei vereinfachter Herstellbarkeit deutlich verbesserte Gebrauchseigenschaften ergeben.

Diese Aufgabe wird erfindungsgemäß bei einem Radialwellendichtring der eingangs genannten Art mit den kennzeichnenden Merkmalen von Anspruch 1 gelöst.

Der erfindungsgemäße Radialwellendichtring ist mit einem Dichtring aus polymerem Dichtungswerkstoff, beispielsweise aus Gummi versehen, der zumindest eine Dichtlippe aufweist, die auf der druckabgewandten Seite mittels eines Backringes auf der abzudichtenden Welle abgestützt und mit einem Versteifungsring unlösbar verbunden ist, wobei der Versteifungsring von einem winkelförmigen Profil ist, das den Backring mit einem in radialer Richtung nach innen vorspringenden Schenke zumindest teilweise übergreift und anliegend berührt. Der Backring wird durch den Versteifungsring in axialer Richtung abgestützt, was axiale Ausweichbewegungen bei höheren Drücken verhindert und eine ausgezeichnete Führung der Dichtlippe gewährleistet. Der erfindungsgemäße Radialwellendichtring läßt sich dadurch problemlos bis zu Wellendurchmessern von 80 mm mit einem Druck des abzudichtenden Mediums von 200 bar beaufschlagen. Die Ausnehmung des den Versteifungsring während der bestimmungsgemäßen Verwendung aufnehmenden Wanddurchbruchs kann so gestaltet werden, wie in bezug auf übliche Radialwellendichtringe gebräuchlich. Dennoch ergibt sich eine ausgezeichnete und durch den Lieferanten des Radialwellendichtrings allein kontrollierbare Führung und Abstützung des Lippenringes und des Backringes unmittelbar durch Bestandteile des Versteiungsrings. Fertigungsungenauigkeiten der zumeist durch den Verwender bestimmten Toleranzen der Ausnehmung sind ohne funktionsbeeinträchtigende Auswirkung.

Bei der Herstellung des bekannten Radialwellendichtrings nach der DE-OS 43 17 489 gelangt eine Verfahren zur Anwendung, bei dem ein Versteifungsring in eine Werkzeugkavität eingelegt und der verbleibende Hohlraum zur Bildung eines Dichtringes mit einem verflüssigten oder pastösen Dichtungswerkstoff ausgefüllt wird, wonach der Dichtungswerkstoff verfestigt, mit dem Versteifungsring verbunden und der Radialwellendichtring aus der Werkzeugkavität entnommen wird. Bei dem bekannten Verfahren wird unabhängig hiervon von der eigentliche Backring erzeugt und in einem weiteren Verfahrensschritt in eine eigens dafür vorgesehene Nut des Lippenrings eingeknüpft. Diese Herstellungsweise ist umständlich und teuer.

Der Erfindung liegt demgemäß die weitere Aufgabe zugrunde, die Herstellung eines Radialwellendichtrings diesen Typs deutlich zu vereinfachen.

Diese Aufgabe wird erfindungsgemäß bei einem Verfahren der vorstehend angegebenen Art dadurch gelöst, daß in die Werkzeugkavität zusätzlich zu dem Versteifungsring ein Backring eingebracht und auf dem radial nach innen vorstehenden Schenke des Versteifungsringes abgelegt wird, wonach der verbleibende Freiraum zur Bildung des Dichtrings mit dem dazu benötigten, polymeren Dichtungswerkstoffs ausgefüllt wird. Durch das unmittelbare Anformen des Dichtrings an den zuvor bereits in die Werkzeugkavität in der für den bestimmungsgemäßen Gebrauch richtigen, gegenseitigen Zuordnung eingefügten Versteifungs- und Backring werden die Herstellungstoleranzen für beide Ringe automatisch ausgeglichen und Radialwellendichtringe erhalten, die sich durch eine optimale Maßhaltigkeit auszeichnen. Hinsichtlich der letztlich erzielten Gebrauchseigenschaften ist das von entscheidendem Vorteil.

Weiter verbesserte Gebrauchseigenschaften lassen sich erzielen, wenn der Backring vor dem Einlegen in die Werkzeugkavität mit einem Hilfsmittel zur Verhinderung seines Verklebens mit dem den Dichtring bildenden, polymeren Dichtungswerkstoff versehen wird. Er weist bei der Anwendung eines solchen Hilfsmittels eine verbesserte Relativbeweglichkeit in bezug auf den Dichtring auf.

Das Hilfsmittel kann dem bei der Herstellung des Backrings verwendeten, polymeren Dichtungswerkstoffs beigemischt werden, was sich als besonders einfach durchführbar erwiesen hat. Abweichend hiervon ist es jedoch ebenfalls möglich, das Hilfsmittel gegebenenfalls ergänzend oder alternativ auf die Oberfläche des zuvor erzeugten Backrings aufzutragen, beispielsweise im Zuge eines Tauch- oder Besprühvorgangs.

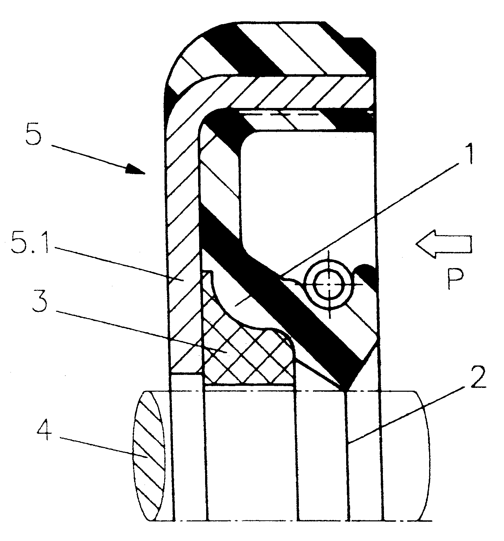

Eine beispielhafte Ausführung des erfindungsgemäßen Radialwellendichtrings ist in der Zeichnung halbgeschnitten wiedergegeben. Der Radialwellendichtring ist mit einem Dichtring 1 aus polymerem Dichtungswerkstoff versehen, beispielsweise aus Gummi, und weist eine Dichtlippe 2 auf, die auf der druckabgewandten Seite mittels eines Backrings 3 auf der abzudichtenden Welle 4 abgestützt ist. Der Dichtring ist mit einem Versteifungsring 5 aus tiefgezogenem Stahlblech unlösbar verbunden, wobei der Versteifungsring 5 von einem winkelförmigen Profil ist, das den Backring 3 mit einem in radialer Richtung nach innen vorspringenden Schenke 5.1 teilweise übergreift und unmittelbar anliegend berührt.

Der Backring 3 besteht aus einem Hartkunststoff. Er ist so dimensioniert, daß er die während der bestimmungsgemäßen Verwendung abzudichtende Welle 4 mit leichtem Spiel umschließt. Das Spiel ist so gering bemessen, daß auch bei Drücken bis zu 200 bar aus der Richtung des eingetragenen Pfeiles kein Einpressen des Dichtungswerkstoffs in den Radialspalt zwischen dem Backring 3 und der Welle 4 zu befürchten ist.

Der Backring 3 wurde vor dem Anformen und Ausvulkanisieren des Dichtrings 1 mit einer Oberflächenbeschichtung aus eine Haftöl versehen. Er verklebt dadurch während der Anvulkanisierung des Dichtring an dem Versteifungsring nicht mit dem Dichtring und weist in bezug auf diesen eine bessere Relativbeweglichkeit auf. Dies ist ausreichend, um der Dichtlippe 2 die beim Auftreten von Radialverlagerungen der Welle 4 erforderliche Führung zu geben. Die Dichtlippe 2 ist mittels einer Ringwendelfeder an die Oberfläche der abzudichtenden Welle 4 angepeßt. Die Ringwendelfeder 4 besteht aus Stahl.

Der erfindungsgemäße Radialwellendichtring ist bei hoher Maßhaltigkeit besonders einfach herstellbar. Er zeichnet sich darüber hinaus durch besonders gute Gebrauchseigenschaften bis zu Drücken von 200 bar aus.

## Patentansprüche

1. Radialwellendichtring mit einem Dichtring (1) aus polymerem Dichtungswerkstoff, der zumindest eine Dichtlippe (2) aufweist, die auf der druckabgewandten Seite mittels eines Backrings (3) auf der abzudichtenden Welle (4) abgestützt und mit einem Versteifungsring (5) unlösbar verbunden ist, dadurch gekennzeichnet, daß der Versteifungsring (5) von einem winkelförmigem Profil ist, das den Backring (3) mit einem in radialer Richtung nach innen vorspringenden Schenke (5) zumindest teilweise übergreift und anliegend berührt.

2. Verfahren zur Herstellung eines Radialwellendichtringes nach Anspruch 1, bei dem ein Versteifungsring ist in eine Werkzeugkavität eingelegt und der verbleibende Hohlraum zur Bildung eines Dichtrings ist mit einem verflüssigten oder pastösen, polymeren Dichtungswerkstoff ausgefüllt wird, bei dem der Dichtungswerkstoff nachfolgend verfestigt, mit dem Versteifungsring (5) verklebt und der Radialwellendichtring aus der Werkzeugkavität entnommen wird, dadurch gekennzeichnet, daß in die Werkzeugkavität zusätzlich zu dem Versteifungsring (5) ein Backring (3) in der für die bestimmungsgemäße Verwendung erforderlichen, gegenseitigen Zuordnung eingelegt und nur der danach verbleibende Freiraum mit dem Dichtungswerkstoff ausgefüllt wird.

3. Verfahren nach Anspruch 2, dadurch gekennzeichnet, daß der Backring (3) vor dem Einlegen in die Werkzeugkavität mit einem Hilfsmittel zur Verhinderung seines Verklebens mit polymerem Dichtungswerkstoff versehen wird.

4. Verfahren nach Anspruch 3, dadurch gekennzeichnet, daß das Hilfsmittel dem bei der Herstellung des Backringes verwendeten, polymeren Dichtungswerkstoff beigemischt wird.

5. Verfahren nach Anspruch 3, dadurch gekennzeichnet, daß das Hilfsmittel auf die Oberfläche des zuvor erzeugten Backringes (3) aufgetragen wird.
